# FASCICULE DE BREVET EUROPEEN

(11) **EP 0 643 378 B1**
(45) Date de publication et mention de la délivrance du brevet: **17.12.1997**
(21) Numéro de dépôt: 94114127.7
(22) Date de dépôt: 08.09.1994
(51) Int. Cl.: G09F 9/37, G02B 26/08

(54) **Réseau miniature d'obturateurs de lumiére**
Mikronetzlichtverschluss
Light-microshutter array

(30) Priorité: 13.09.1993 FR 9310960
(43) Date de publication de la demande: 15.03.1995
(73) Titulaire: CSEM, Centre Suisse d'Electronique et de Microtechnique S.A., 2007 Neuchâtel (CH)
(72) Inventeur: Moret, Jean-Marc, CH-2016 Cortaillod (CH); Renaud, Philippe, CH-1025 St-Sulpice (CH); Rudolf, Felix, CH-2072 St-Blaise (CH); Vuilleumier, Raymond, CH-2052 Fontainemelon (CH)
(74) Mandataire: Patry, Didier Marcel Pierre

(56) Documents cités:
- EP-A- 0 143 079
- EP-A- 0 453 400
- EP-A- 0 469 293
- FR-A- 2 542 105
- US-A- 4 383 255
- US-A- 4 566 935
- MEMS, 10 Février 1993, FT. LAUDERDALE EUA pages 124 - 127 V.P.JAECKLIN 'optical microshutter and torsional micromirrors for nlight modulator arrays'
- EURODISPLAY, Septembre 1984, PARIS FRANCE pages 441 - 44 R.VUILLEUMIER 'novel electromechanical microshutter display device'
- IBM TECNICAL DISCLOSURE BULLETIN, vol.20, no.1, Juin 1977, US pages 355 - 356 K.E.PETERSEN 'micromecanical light deflector array'
- SPATIAL LIGHT MODULATORS AND APPLICATIONS, Août 1989, SAN DIEGO CA US pages 86 - 102, XP000351394 L.J.HORNBECK 'deformable mirror spatial light modulators'

## Description

La présente invention est relative à un réseau d'obturateurs miniatures de lumière destiné plus particulièrement à transformer un faisceau lumineux en un ensemble de forme matricielle ou linéaire de points de lumière, chacun de ces points pouvant sélectivement être activé ou désactivé pour laisser passer ou bloquer la lumière. Un tel réseau peut aussi être appelé "réseau modulateur de lumière".

Des réseaux de ce type ont déjà été mis au point et décrit notamment dans les brevets US-A-4 383 255 et EP-0 453 400 A1, dans un article de R. Vuilleumier et al., paru à l'occasion de la conférence Eurodisplay 84, Paris, septembre 1984 et, plus récemment, dans deux articles de V.P Jaecklin et al. parus respectivement à l'occasion de la MEMS-93 tenu du 7 au 10 février 1993 à Ft. Lauderdale, Fa. E U A, et dans le Digest of Technical Papers, dans TRANSDUCERS, Yokohama, Japon, 7 à 10 juin 1993.

Le réseau décrit dans l'avant-dernier document mentionné ci-dessus comprend un substrat dans lequel sont réalisés les obturateurs du réseau. Chaque obturateur comporte un micro-volet attaché au substrat par des attaches élastiques s'opposant au mouvement de rotation du micro-volet à partir d'une position de repos prédéterminée. Le réseau comporte également des moyens de commande électrostatiques des micro-volets pour en commander sélectivement la rotation d'un angle relativement faible. En outre, chaque micro-volet est équipé d'une surface réfléchissante.

Le réseau, et plus spécifiquement les surfaces réfléchissantes des microvolets, peuvent être irradiés par un faisceau lumineux à moduler, la modulation étant réalisée en faisant sélectivement tourner les micro-volets dont la commande peut être matricielle.

Le document SPATIAL LIGHT MODULATORS AND APPLICATIONS, Août 1989, SAN DIEGO CA US pages 86 - 102, XP000351394 L.J.HORNBECK 'deformable mirror spatial light modulators' décrit un dispositif à miroirs déformables ne montrant ni diaphragme placé sur le trajet optique associé au réseau, ni surfaces réfléchissantes se faisant face et parallèles entre elles dans la position de repos des microvolets.

US-A-4 566 935 décrit un modulateur spatial de lumière comprenant un réseau d'obturateurs miniatures de lumière à microvolets dans lequel la surface réfléchissante supplémentaire ne fait pas face à la surface réfléchissante de microvolets.

EP-A-0 453 400 décrit un dispositif de modulation de lumière à adressage matriciel dans lequel aucun diaphragme n'est prévu et dans lequel la surface réfléchissante supplémentaire ne fait pas face à la surface réfléchissante des microvolets.

L'invention a pour but de proposer un réseau perfectionné d'obturateurs miniatures de lumière du genre brièvement décrit ci-dessus.

L'invention a donc pour objet un réseau d'obturateurs miniatures de lumière selon la revendication 1.

L'un des avantages que procure un réseau selon les caractéristiques qui viennent d'être énoncées, réside dans la sélectivité entre passage et blocage de la lumière qui revient pour ainsi dire à une commutation du faisceau par tout ou rien. Cette propriété va de pair avec les avantages déjà assurés dans le réseau décrit dans l'article analysé ci-dessus et qui sont notamment d'une part le très faible angle de rotation (pour fixer les idées, celui-ci peut être de l'ordre de 7° seulement), et d'autre part la faible tension de commande et le temps de réponse très court, propriétés qui résultent de ce faible angle de rotation.

En outre, grâce aux caractéristiques de ce réseau, on peut collecter une partie importante de la lumière incidente (typiquement plus de la moitié) frappant chaque microvolet pour former le faisceau de sortie associé à celui-ci. Il en résulte un rendement lumineux très favorable du réseau selon l'invention.

D'autres caractéristiques et avantages de l'invention apparaîtront au cours de la description qui va suivre, donnée uniquement à titre d'exemple et faite en se référant aux dessins annexés sur lesquels:
- la figure 1 montre schématiquement deux obturateurs individuels d'un réseau selon l'invention, le microvolet de l'un de ces obturateurs se trouvant dans la position activée, celui de l'autre étant dans sa position non activée;
- la figure 2 est une représentation en plan, fortement agrandie, de quatre obturateurs d'un réseau selon l'invention;
- la figure 3 est une vue en coupe selon la ligne III-III de la figure 2;
- la figure 4 est une vue en coupe selon la ligne IV-IV de la figure 2;
- la figure 5 est une vue en perspective à très grande échelle d'un microvolet et de ses électrodes de commande associées;
- la figure 6 montre très schématiquement et à petite échelle une unité de commutation de lumière incorporant un réseau conçu selon l'invention;
- la figure 7 est une vue en plan de l'unité de la figure 6;
- la figure 8 montre schématiquement comment-des unités multiples selon les figures 6 et 7 peuvent être utilisées en combinaison pour former un dispositif de distribution de lumière;
- la figure 9 montre par une vue schématique, de nouveau à très grande échelle, une variante de réalisation de l'invention; et
- la figure 10 montre une variante de réalisation d'un obturateur selon l'invention.

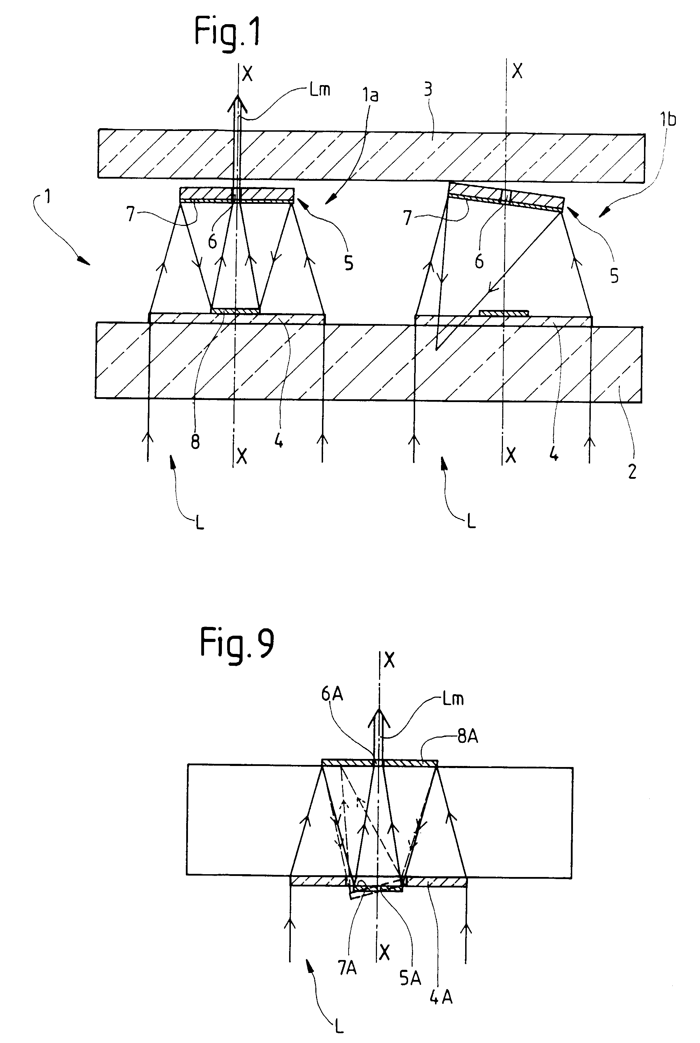

On va tout d'abord se référer à la figure 1 qui montre le principe de construction et de fonctionnement d'un réseau 1 d'obturateurs de lumière selon l'invention, conformément à une première variante de réalisation.

Les obturateurs 1a, 1b ...définissent chacun un trajet optique X-X qui est de préférence parallèle à la direction générale de la lumière incidente L frappant le réseau. Il est clair que ce dernier comprend un grand nombre d'obturateurs 1a, 1b ....etc. coopérant ensemble et disposés, par exemple, selon une matrice.

Le réseau 1 comprend une plaque transparente 2, de préférence en verre, par laquelle entre le faisceau de lumière L. Du côté opposé, le réseau comprend une plaque de sortie 3, également transparente et de préférence en verre, à travers laquelle sort de la lumière Lm modulée en fonction du mode de commande du réseau (par exemple matriciel).

Chaque obturateur 1a, 1b,.... comporte, centrés sur le trajet optique X-X qui lui est associé, une lentille de focalisation convergente 4, un micro-volet 5 percé d'un diaphragme 6 et présentant une surface réfléchissante 7, ainsi qu'une surface réfléchissante supplémentaire 8 qui est réalisée sur la lentille 4.

Sur la figure 1, l'obturateur 1a est dans une configuration dite non activée, ce qui veut dire qu'aucune tension de commande ne lui est appliquée. Cela veut dire aussi, dans le contexte du mode de réalisation décrit ici, que l'obturateur laisse passer de la lumière à travers son diaphragme 6, la lumière incidente L étant d'abord focalisée par la lentille 4, renvoyée vers l'arrière par la surface réfléchissante 7 du microvolet 5, renvoyée de nouveau vers l'avant par la surface réfléchissante supplémentaire 8, et enfin envoyée vers l'extérieur à travers le diaphragme 6 pour passer à travers la plaque de support 3 et devenir une composante du faisceau de lumière modulée Lm.

Par contre, l'obturateur 1b est représenté dans sa configuration dite activée dans laquelle son microvolet 5 est tourné d'un angle faible (7° par exemple) autour d'un axe Y-Y (non indiqué sur la figure 1) qui est perpendiculaire à l'axe X-X. Pour atteindre cette configuration, une tension de commande doit être appliquée à l'obturateur; ce qui va être décrit en détail plus loin.

On voit que la configuration activée conduit à dévier le faisceau de lumière renvoyé par la surface réfléchissante 7 présente sur le microvolet 5 et préalablement focalisé par la lentille 4, en dehors du champ propre à la surface réfléchissante supplémentaire 8. Celle-ci n'est donc plus en mesure de faire passer la lumière à travers le diaphragme 6.

La suppression de la tension de commande replace le microvolet 5 dans sa position initiale (celle de l'obturateur 1a), grâce à la force élastique de déformation engendrée dans les attaches du microvolet; ce qui sera décrit en détail par la suite.

Il est donc clair que la disposition nouvelle préconisée par l'invention conduit à une commande franche par tout ou rien des points matérialisés par les diaphragmes 6 des obturateurs, la configuration non activée correspondant du côté de la plaque de sortie 3 à la présence d'un point lumineux et le cas inverse à l'absence d'un tel point.

Les termes "non activé" et "activé" utilisés dans la présente description ne doivent pas être pris au sens strict. En effet, ils désignent simplement la présence, respectivement l'absence, de lumière à la sortie d'un obturateur, situations qui peuvent être obtenues, soit par la présence soit par l'absence d'une tension de commande selon la configuration et la forme des électrodes qui sont associées à chaque microvolet.

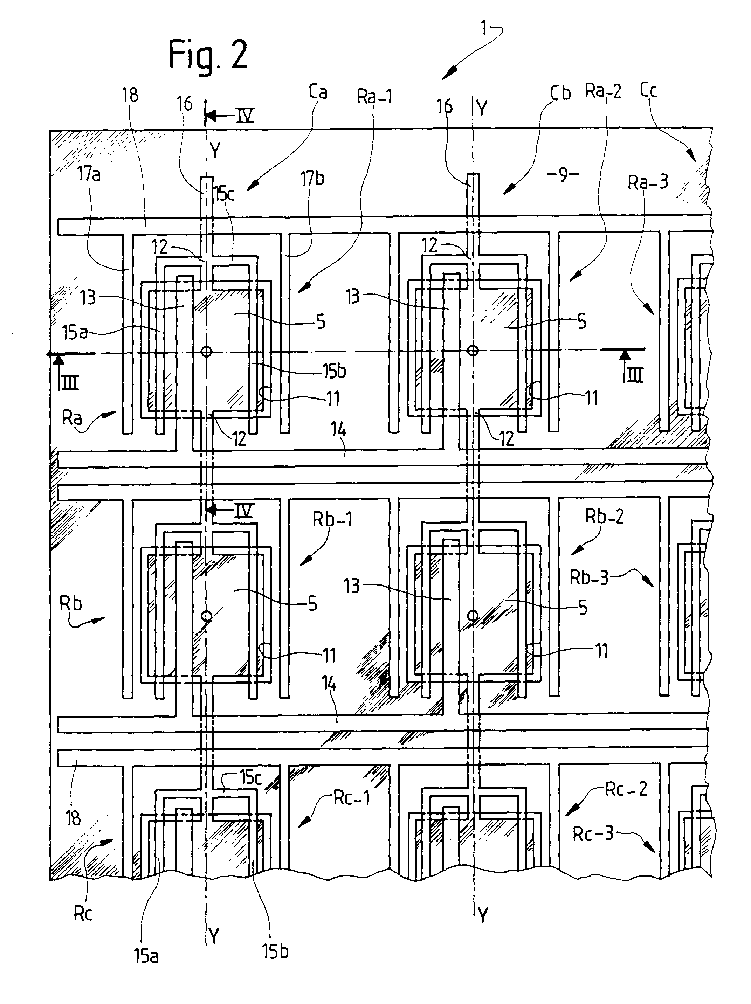

On va se référer maintenant aux figures 2 à 5 qui illustrent plus précisément une construction préférée du réseau selon l'invention.

Comme déjà indiqué à propos de la figure 1, le réseau comprend une plaque d'entrée 2 et une plaque de sortie 3. Entre ces plaques 2 et 3 est disposée une plaquette 9 formant substrat qui est de préférence en silicium. Cette plaquette 9 est micro-usinée pour y former les microvolets 5 et les ensembles d'électrodes qui leur sont associés.

Un cadre 10 formant entretoise ceinture le réseau de microvolets et maintient une distance définie entre la plaque de sortie 3 et la plaquette 9.

Un procédé préféré de micro-usinage pouvant être utilisé pour obtenir les formes souhaitées dans cette plaquette 9, est décrit dans les brevets et articles précités et il n'est donc pas nécessaire d'y revenir dans la présente description.

Comme on peut le constater sur la figure 2, le réseau 1 est matriciel avec des rangées Ra, Rb, Rc... et des colonnes Ca, Cb, Cc...d'obturateurs resp. Ra-1, Ra-2, Ra-3....,Rb-1, Rb-2, Rb-3... etc., les rangées pouvant comporter typiquement 100 obturateurs et le nombre de rangées pouvant être de 50, par exemple dans un même réseau.

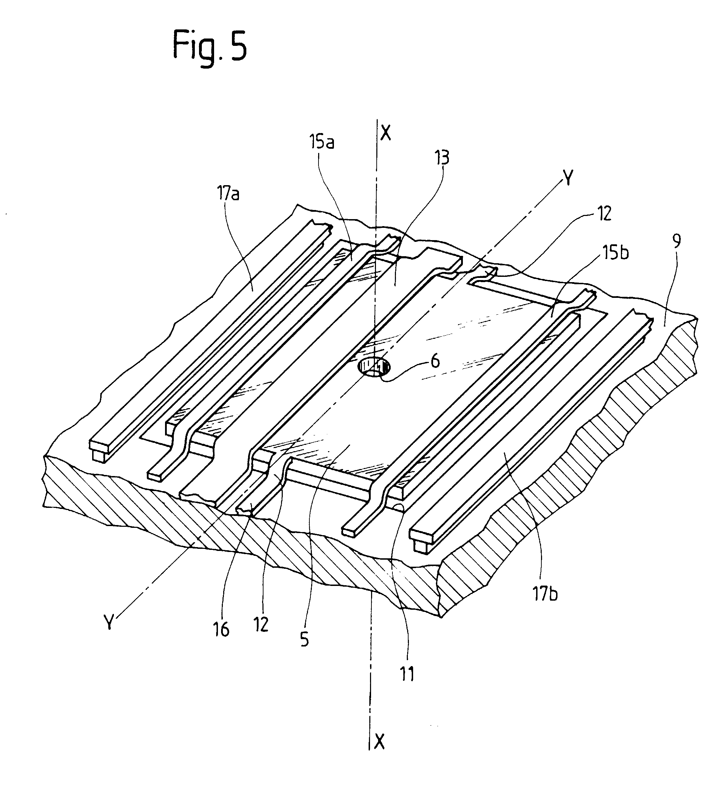

La figure 5 qui est une vue en perspective d'un seul microvolet 5 et de ses électrodes, montre clairement que le microvolet 5 est disposé dans une ouverture 11 pratiquée dans la plaquette 9 et qu'il est attaché à celle-ci par deux attaches (ou bras de suspension) élastiques 12 alignées selon l'axe Y-Y perpendiculaire à l'axe optique X-X de l'obturateur considéré, cet axe Y-Y étant l'axe de rotation du microvolet 3.

Parallèlement à l'axe Y-Y s'étendent (voir figures 2 et 5):
- une électrode de commande 13 reliée à un conducteur commun de commande 14 (figure 2) courant le long de la rangée de microvolets considérée;
- deux électrodes de butée 15a et 15b connectées en commun par un conducteur 15c à un conducteur 16 qui relie électriquement, par l'intermédiaire de leurs attaches conductrices 12, tous les microvolets 5 d'une même colonne du réseau;
- deux électrodes de maintien 17a et 17b qui s'étendent dans la direction des colonnes le long des bords opposés de l'ouverture 11. Ces électrodes sont reliées ensemble par rangée grâce à un conducteur commun 18.

Les électrodes de commande 13 et de butée 15a et 15b s'étendent en travers de l'ouverture 11 au dessus de chaque microvolet 5. Par ailleurs, les conducteurs 16 croisent les conducteurs 14 et 18 sans être connectés électriquement à ceux-ci.

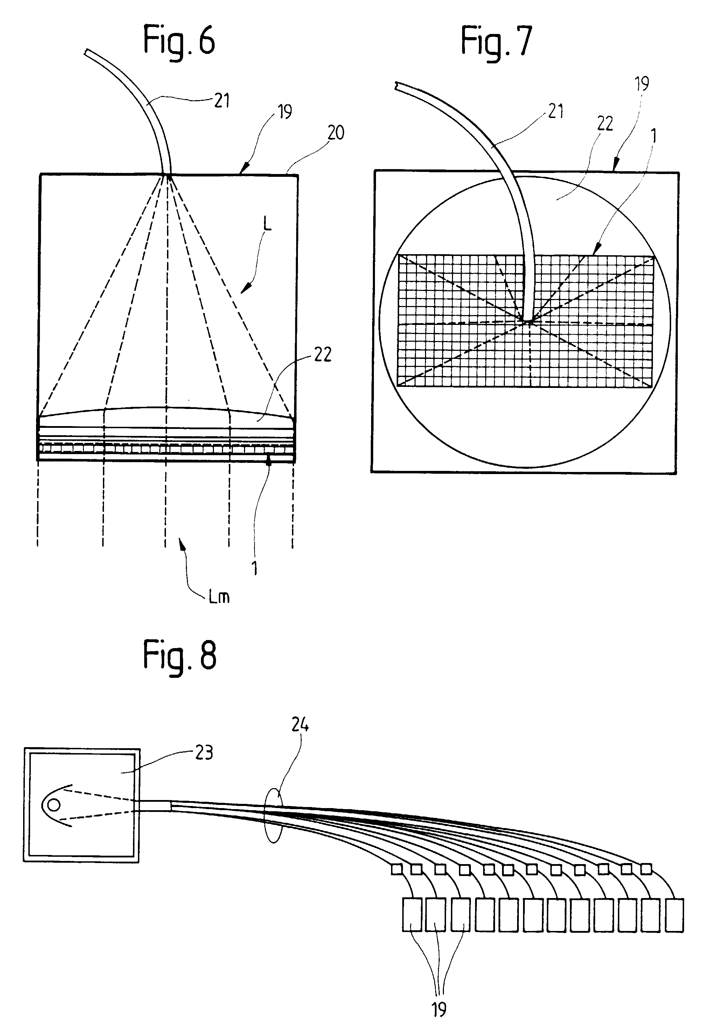

Comme cela apparaît clairement à la figure 6 du premier des articles précités de V.P. Jaecklin et al., la caractéristique du déplacement en fonction de la tension de commande d'un microvolet, tel qu'utilisé dans la présente invention, présente une hystérèse. De ce fait, il est alors possible de réaliser un adressage matriciel, tel, par exemple, que celui décrit dans le brevet européen précité, au moyen d'une combinaison judicieuse d'électrodes et de tensions de commande appropriées.

On constate donc que le réseau conçu de cette manière peut être commandée de façon matricielle en appliquant aux conducteurs 14, 16 et 18 des signaux appropriées sous forme binaire. Ainsi, le réseau permet de transformer un faisceau lumineux large en une série de points lumineux en matrice dont chaque point peut être commandé individuellement.

Les surfaces réfléchissantes 7 et 8 sont avantageusement réalisées sous la forme de couches d'aluminium déposées par des techniques d'évaporation ou de pulvérisation. Les lentilles 4 peuvent être formées directement par micro-usinage dans la plaque d'entrée 2, par exemple sous la forme de lentilles de Fresnel, au centre desquelles sont respectivement prévues les couches formant les surfaces réfléchissantes supplémentaires 8. Les lentilles peuvent également être rèalisées sous la forme d'éléments optiques diffractants.

A titre d'exemple, un microvolet du réseau 1 peut avoir une forme carrée de 100 microns de côté, le diaphragme 6 étant circulaire et ayant un diamètre choisi entre 5 et 20 microns. Vu le faible angle de rotation des microvolets, le temps de commutation de chaque obturateur peut être de 50 microsecondes seulement avec une tension de commande de 15 Volts.

Un exemple d'application d'un réseau 1 selon l'invention est représenté sur les figures 6 et 7. Dans ce cas, il est placé dans une capsule 19 opaque en forme de boîte cylindrique dont le fond 20 est percé, de manière qu'un faisceau de lumière puisse y être introduit à partir d'une fibre optique 21. Le réseau 1 est placé dans l'ouverture de la capsule 19, une lentille collimatrice 22 étant placée dans son voisinage pour former, à partir du faisceau entrant, un faisceau collimaté irradiant le réseau 1. A titre d'exemple, celui-ci peut comprendre 100 obturateurs par rangée et 50 obturateurs par colonne. La figure 7 montre schématiquement et en plan comment le réseau 1 et la lentille 22 peuvent être associés, le fond 20 de la capsule étant supposé enlevé.

La figure 8 montre une application d'une série de capsules 19 selon les figures 6 et 7 pour constituer un dispositif de distribution de lumière. Dans ce cas une source lumineuse 23 est connectée par un faisceau 24 de fibres optiques à une rangée de capsules 19. Cette disposition permet par exemple l'impression de pages à haute définition en faisant défiler un support photosensible devant la rangée de capsules, chaque réseau de microvolets étant convenablement commandé comme décrit ci-dessus.

On peut également envisager d'utiliser un réseau 1 de grandes dimensions pour la projection d'images du type télévision. Dans ce cas, un réseau modulateur de lumière selon l'invention pourrait assurer la haute définition en prévoyant pour chaque composante couleur un réseau comprenant un très grand nombre d'obturateurs.

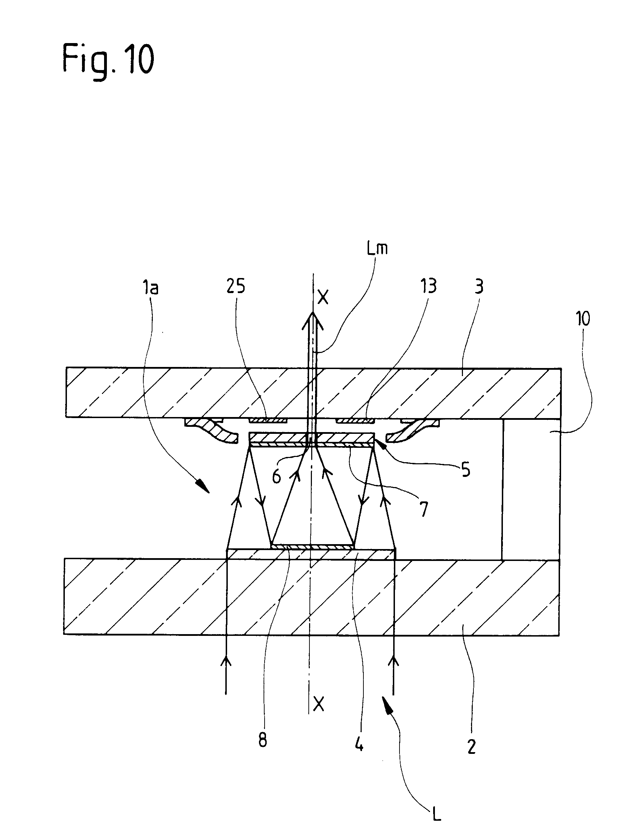

La figure 9 représente une variante de l'invention réalisable au niveau de chaque obturateur dans le réseau. Dans ce cas, un microvolet 5A, avec sa surface réfléchissante 7A, est placé au centre de la lentille focalisatrice 4A, tandis que le miroir supplémentaire 8A est prévu du côté opposé et pourvu du diaphragme 6A.

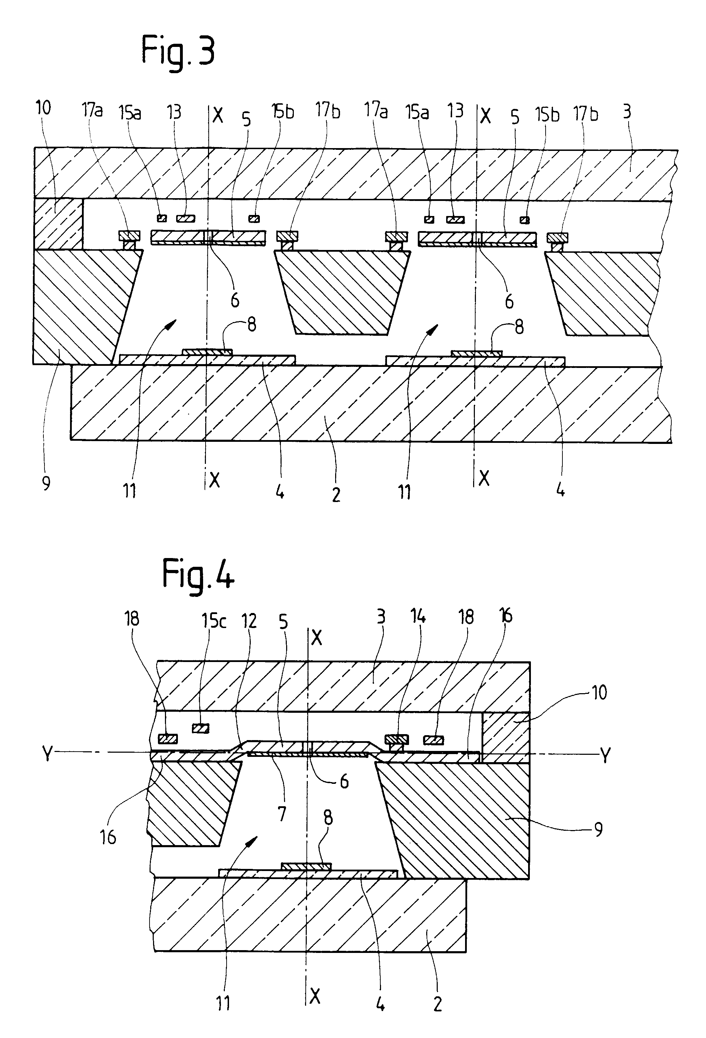

La figure 10 représente un autre mode de réalisation de l'invention qui, du point de vue optique, est semblable au mode de réalisation des figures 3 à 5, mais qui en diffère par sa construction. Dans ce cas, le réseau d'obturateurs est réalisé directement sur la plaque de sortie 3 au lieu de l'être dans une plaquette de silicium distincte. Le réseau est alors construit à l'aide de minces couches de polysilicium présentant les mêmes électrodes que sur les figures 3 à 5. Il peut être souhaitable non seulement dans ce mode de réalisation, mais également dans ceux décrits ci-dessus, de prévoir en supplément une électrode dite de compensation indiquée par la référence 25 sur la figure 10. Cette électrode a pour but de maintenir le microvolet 5 dans sa position horizontale, lorsqu'il est à l'état de repos. En effet, il peut se produire qu'en l'absence de toute tension de commande, ce dernier soit légèrement tourné.

Bien entendu, d'autres variantes de réalisation sont possibles dans le cadre de la présente invention.

## Revendications

1. Réseau (1) d'obturateurs miniatures de lumière, destiné plus particulièrement à transformer un faisceau lumineux (L) en de la lumière modulée (Lm) formée d'un ensemble matriciel ou linéaire de points de lumière, chacun de ces obturateurs pouvant sélectivement être activé ou désactivé pour laisser passer ou bloquer la lumière, ledit réseau (1) comprenant un substrat (9) auquel sont attachés des microvolets (5; 5A) formant respectivement lesdits obturateurs, par l'intermédiaire d' attaches élastiques (12) s'opposant à leur rotation à partir d'une position de repos prédéterminée, ledit réseau (1) comportant également des moyens de commande (13) des microvolets pour en commander sélectivement la rotation à partir de ladite position de repos, lesdits micro-volets (5; 5A) étant respectivement placés sur des trajets optiques (X-X) de ladite lumière pour, selon leur position, pouvoir interrompre ou établir lesdits trajets, chaque micro-volet (5) étant en outre équipé d'une surface réfléchissante (7; 7A) pour dévier ladite lumière lorsqu'il se trouve dans sa position d'obturation, ledit réseau étant caractérisé en ce que le réseau comprend, sur le trajet optique (X-X) associé à chaque micro-volet (5; 5A), une surface réfléchissante supplémentaire (8; 8A), un diaphragme (6; 6A), ainsi qu'un moyen de focalisation (4; 4A), la surface réfléchissante supplémentaire, le diaphragme et les moyens de focalisation étant placés de telle manière que lorsque ledit micro-volet (5; 5A) se trouve dans l'une de ses positions, la lumière soit focalisée sur ledit diaphragme (6; 6A) pour laisser passer cette lumière et que celle-ci soit déviée par rapport audit diaphragme (6; 6A) et par conséquent bloquée, lorsque ledit micro-volet (5; 5A) se trouve dans son autre position, en ce que ladite surface réfléchissante et la surface réfléchissante supplémentaire se font face en ce que ledit diaphragme est ménagé dans une desdites surfaces réfléchissantes et en ce que lesdites surfaces réfléchissantes sont parallèles dans la position de repos desdits microvolets.

2. Réseau d'obturateurs suivant la revendication 1, caractérisé en ce que ladite surface réfléchissante supplémentaire (8) est prévue au centre dudit moyen de focalisation (4), et en ce que ledit diaphragme (6) est percé dans ledit microvolet (5).

3. Réseau d'obturateurs suivant la revendication 1, caractérisé en ce que ledit microvolet (5A) est placé au centre dudit moyen de focalisation (4A) et en ce que ladite surface réfléchissante supplémentaire (8A) est percée en son centre par ledit diaphragme (6A).

4. Réseau d'obturateurs suivant l'une quelconque des revendications 1 à 3, caractérisé en ce que ledit moyen de focalisation (4; 4A) est une lentille convergente.

5. Réseau d'obturateurs suivant la revendication 4, caractérisé en ce que ladite lentille (4; 4A) est une lentille de Fresnel.

6. Réseau d'obturateurs suivant la revendication 4, caractérisé en ce que ladite lentille (4; 4A) est un élément optique diffractant.

7. Réseau d'obturateurs suivant l'une quelconque des revendications précédentes, caractérisé en ce que ladite surface réfléchissante supplémentaire (8) est formée par une couche spéculaire déposée au centre dudit moyen de focalisation (4).

8. Réseau d'obturateurs suivant l'une quelconque des revendications précédentes, caractérisé en ce que ses microvolets (5, 5A) et leurs moyens de commande (13) sont micro-usinés sur une seule plaquette de silicium (9) s'étendant perpendiculairement auxdits trajets optiques (X-X).

9. Réseau d'obturateurs suivant la revendication 8, caractérisé en ce que ladite plaquette (9) est montée entre deux plaques transparentes (2, 3) qui lui sont parallèles, éventuellement avec interposition d'un cadre d'entretoisement (10), lesdites plaques (2, 3) formant respectivement plaque d'entrée et plaque de sortie dudit réseau, et en ce que lesdits moyens de focalisation (4) sont micro-usinés dans ladite plaque d'entrée (2).

10. Réseau d'obturateurs suivant l'une quelconque des revendications 1 à 7, caractérisé en ce que ses microvolets (5) et leurs moyens de commande (13) sont directement micro-usinés sur une plaque transparente (3) formant plaque de sortie du réseau, et en ce que ladite plaque transparente de sortie (3) est disposée parallèlement à une plaque transparente d'entrée (2) du réseau, éventuellement avec interposition d'un cadre d'entretoisement, plaque d'entrée (2) dans laquelle sont micro-usinés lesdits moyens de focalisation (4).

## Patentansprüche

1. Netzwerk (1) von Miniaturlichtsperren, insbesondere dazu bestimmt, einen Lichtstrahl (L) in moduliertes Licht (Lm) zu transformieren, gebildet von einer Matrixgruppe oder linearen Gruppe von Lichtpunkten, wobei jede dieser Lichtsperren selektiv aktivierbar oder deaktivierbar ist, um das Licht passieren zu lassen oder zu sperren, welches Netzwerk (1) ein Substrat (9) umfaßt, an dem jeweils die Sperren bildende Mikroklappen (5; 5A) mittels elastischer Aufhängungen (12) angebracht sind, die sich deren Drehung ausgehend von einer vorbestimmten Ruhelage widersetzen, welches Netzwerk (1) ferner Steuermittel (13) der Mikroklappen umfaßt, um selektiv deren Drehung ausgehend von der Ruhelage zu bewirken, welche Mikroklappen (5; 5A) in optischen Bahnen (X-X) des Lichtes plaziert sind, um je nach ihrer Lage die Bahnen unterbrechen oder etablieren zu können, wobei jede Mikroklappe (5) ferner mit einer reflektierenden Oberfläche (7; 7A) versehen ist, um das Licht abzulenken, wenn sie sich in ihrer Sperrlage befindet, welches Netzwerk dadurch gekennzeichnet ist, daß es in der jeweils einer Mikroklappe (5; 5A) zugeordneten optischen Bahn (X-X) eine zusätzliche reflektierende Oberfläche (8; 8A), eine Blende (6; 6A) sowie ein Fokalisiermittel (4; 4A) umfaßt, welche zusätzliche reflektierende Oberfläche, Blende und Fokalisiermittel derart angeordnet sind, daß dann, wenn die Mikroklappe (5,5A) in einer ihrer Lagen ist, das Licht auf die Blende (6; 6A) fokalisiert ist, um dieses Licht passieren zu lassen, und daß es relativ zu der Blende (6; 6A) abgelenkt und infolgedessen gesperrt wird, wenn die Miokroklappe (5; 5A) sich in ihrer anderen Lage befindet, daß die reflektierende Oberfläche und die zusätzliche reflektierende Oberfläche einander zugekehrt sind, daß die Blende in einer dieser reflektierenden Oberflächen ausgebildet ist und daß die reflektierenden Oberflächen in der Ruhelage der Mikroklappen parallel sind.

2. Netzwerk von Sperren nach Anspruch 1, dadurch gekennzeichnet, daß die zusätzliche reflektierende Oberfläche (8) im Zentrum des Fokalisiermittels (4) vorgesehen ist und daß die Blende (6) in die Mikroklappe (5) gebohrt ist.

3. Netzwerk von Sperren nach Anspruch 1, dadurch gekennzeichnet, daß die Mikroklappe (5A) im Zentrum des Fokalisiermittels (4A) plaziert ist und daß die zusätzliche refklektierende Oberfläche (8A) in ihrem Zentrum von der Blende (6A) durchbohrt ist.

4. Netzwerk von Sperren nach einem der Ansprüche 1 bis 3, dadurch gekennzeichnet, daß das Fokalisiermittel (4; 4A) eine Sammellinse ist.

5. Netzwerk von Sperren nach Anspruch 4, dadurch gekennzeichnet, daß die Linse (4; 4A) eine Fresnel-Linse ist.

6. Netzwerk von Sperren nach Anspruch 4, dadurch gekennzeichnet, daß die Linse (4; 4A) ein beugendes optisches Element ist.

7. Netzwerk von Sperren nach einem der vorangehenden Ansprüche, dadurch gekennzeichnet, daß die zusätzliche reflektierende Oberfläche (8) von einer Spiegelschicht gebildet ist, die im Zentrum des Fokalisiermittels (4) aufgebracht ist.

8. Netzwerk von Sperren nach einem der vorangehenden Ansprüche, dadurch gekennzeichnet, daß seine Mikroklappen (5; 5A) und ihre Steuermittel (13) auf einer einzigen Siliziumplatte (9) mikrogefertigt sind, die sich senkrecht zu den optischen Bahnen (X-X) erstreckt.

9. Netzwerk von Sperren nach Anspruch 8, dadurch gekennzeichnet, daß die Platte (9) zwischen zwei zu ihr parallelen transparenten Platten (2, 3), gegebenenfalls unter Zwischenfügung eines Distanzrahmens (10), montiert ist, welche Platten (2, 3) eine Eintritts- bzw. Austrittsplatte des Netzwerks bilden, und daß das Fokalisiermittel (4) in der Eintrittsplatte (2) mikrogefertigt ist.

10. Netzwerk von Sperren nach einem der Ansprüche 1 bis 7, dadurch gekennzeichnet, daß seine Mikroklappen (5) und Steuermittel (13) direkt auf einer die Austrittsplatte des Netzwerks bildenden transparenten Platte (3) mikrogefertigt sind, und daß die transparente Austrittsplatte (3) parallel zu einer transparenten Eintrittsplatte (2) des Netzwerks angeordnet ist, gegebenenfalls unter Zwischenfügung eines Distanzrahmens, in welcher Eintrittsplatte (2) das Fokalisiermittel (4) mikrogefertigt ist.

## Claims

1. Network (1) of miniature light obturators, intended more specifically to transform a luminous beam (L) into modulated light (Lm) formed by a matricial or linear set of points of light, each of such obturators being capable of selective activation or disactivation in order to allow passage of, or to block the light, said network (1) comprising a substrate (9) to which microshutters (5; 5A) respectively forming said obturators are attached by means of elastic fastenings (12) opposing resistance to their rotation away from a predetermined rest position, said network (1) also including control means (13) for the microshutters for selectively controlling the rotation thereof away from said rest position, said microshutters (5; 5A) being respectively placed in the optical paths (X-X) of said light in order to be able to interrupt or to establish said paths in accordance with their position, each microshutter (5; 5A) further being fitted out with a reflecting surface (7; 7A) for deflecting said light when it is in its blocking position, said network being characterized in that the network comprises, in the optical path (X-X) associated with each microshutter (5; 5A), a supplementary reflecting surface (8; 8A), a diaphragm (6; 6A) as well as a focussing means (4; 4A), the supplementary reflecting surface, the diaphragm and the focussing means being placed in a manner such that when said microshutter (5; 5A) is in the one of its positions, the light is focussed on said diaphragm (6; 6A) in order to allow such light to pass and that the latter is deflected relative to said diaphragm (6; 6A) and consequently blocked, when said microshutter (5; 5A) is in its other position, in that said reflecting surface and the supplementary reflecting surface face each other, in that said diaphragm is arranged in one of said reflecting surfaces and in that said reflecting surfaces are parallel in the rest position of said microshutters.

2. Network of obturators according to claim 1, characterized in that said supplementary reflecting surface (8) is provided at the center of said focussing means (4), and in that said diaphragm (6) is pierced in said microshutter (5).

3. Network of obturators according to claim 1, characterized in that said microshutter (5A) is placed in the center of said focussing means (4A) and in that said supplementary reflecting surface (8A) is pierced in its center by said diaphragm (6A).

4. Network of obturators according to any one of claims 1 to 3, characterized in that said focussing means (4; 4A) is a converging lens.

5. Network of obturators according to claim 4, characterized in that said lens (4; 4A) is a Fresnel type lens.

6. Network of obturators according to claim 4, characterized in that said lens (4; 4A) is a diffracting optical element.

7. Network of obturators according to any one of the preceding claims, characterized in that said supplementary reflecting surface (8) is formed by a specular layer deposited at the center of said focussing means (4).

8. Network of obturators according to any one of the preceding claims, characterized in that its microshutters (5; 5A) and their control means (13) are micromachined on a single silicon wafer (9) extending perpendicularly to said optical paths (X-X).

9. Network of obturators according to claim 8, characterized in that said wafer (9) is assembled between two transparent plates (2, 3) parallel thereto, possibly with interposition of a spacer frame (10), said plates (2, 3) respectively forming an input plate and an output plate for said network, and in that said focussing means (4) are micromachined in said input plate (2).

10. Network of obturators according to any one of claims 1 to 7, characterized in that its microshutters (5) and their control means (13) are directly micromachined on a transparent plate (3) forming an output plate for the network, and in that said transparent output plate (3) is arranged parallel to a transparent input plate (2) for the network, possibly with interposition of a spacer frame, in which input plate (2) said focussing means (4) are micromachined.
